# EUROPEAN PATENT APPLICATION

(11) **EP 1 602 511 A1**
(43) Date of publication of application: **07.12.2005**
(21) Application number: 05010534.5
(22) Date of filing: 13.05.2005
(51) Int. Cl.: B60G 17/033, B60G 17/056, B60G 21/06, B60G 21/10

(54) **Command system for hydropneumatic vehicle suspension**

(30) Priority: 04.06.2004 JP 2004166704
(71) Applicant: Toyota Jidosha Kabushiki Kaisha, Toyota-shi, Aichi-ken 471-8571 (JP)
(72) Inventor: Hashimoto, Naoyuki, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(57) **Abstract**

A hydraulic control apparatus (10; 210) comprising a housing (70) including first sliding-related portions (100, 104); a piston assembly (72; 202) including second sliding-related portions (74, 140, 141; 200) which cooperate with the first sliding-related portions to provide pairs of first and second sliding-related portions; and elastically deformable sealing members (114, 92) each of which is supported by one of the first and second sliding-related portions of a corresponding one of the pairs, such that the each sealing member is slideable on the other of the first and second sliding-related portions. The pairs of first and second sliding-related portions and the sealing members cooperate with each other to separate an inner space of the housing into hydraulic chambers (150). When the piston assembly is moved in the housing in a movement direction, the each sealing member supported by the one of the first and second sliding-related portions is slid on the other of the first and second sliding-related portions, and a volume of each of the hydraulic chambers is changed. At least one pair of first and second sliding-related portions (104, 140, 141; 200) of the pairs of first and second sliding-related portions exhibits, when the piston assembly is positioned, in the movement direction, at different positions (140, 141; 200) relative to the housing, different resistances to the movement of the piston assembly relative to the housing.

## Description

The present application is based on Japanese Patent Application No. 2004-166704 filed on June 4, 2004, the contents of which are incorporated herein by reference.

### BACKGROUND OF THE INVENTION

### Field of the Invention

The present invention relates to a hydraulic control apparatus (e.g., a so-called "hydraulic control cylinder") for use in a suspension system of a vehicle, and in particular to such a hydraulic control apparatus that is connected to each of a plurality of hydraulic suspension devices (e.g., so-called "hydraulic suspension cylinders") respectively provided for a plurality of wheels of a vehicle and controls an operation of the each suspension device.

### Discussion of Related Art

An example of the above-indicated hydraulic control apparatus is disclosed by U.S. Patent No. 3,024,037. The disclosed hydraulic control apparatus or cylinder includes a housing having a partition wall, and a piston assembly including two pistons that cooperates with the partition wall to separate an inner space of the housing into four hydraulic chambers each of which is filled with a hydraulic liquid. The four hydraulic chambers communicate with four hydraulic suspension devices or cylinders, respectively, that are respectively provided for four wheels of an automotive vehicle, and the piston assembly is moveable in the housing to balance respective pressures of the respective hydraulic liquids present in the four suspension cylinders. Thus, the hydraulic control cylinder controls respective operations of the four hydraulic suspension cylinders, such that the respective operations of the suspension cylinders interact with each other. For example, when the vehicle pitches, the piston assembly is not moved and accordingly the four suspension cylinders normally operate independent of each other; and when one of the four wheels of the vehicle rides on a protuberance of a road surface, the piston assembly is moved and accordingly the four suspension cylinders operate to accommodate the effects of riding of the one wheel.

### SUMMARY OF THE INVENTION

However, in the above-indicated hydraulic control cylinder, the piston assembly is moved with a substantially constant ease (or difficulty) over an entirety of a permitted movement range in which the piston assembly is permitted to move. Therefore, wherever the piston assembly may be positioned in the permitted movement range, the hydraulic control cylinder exhibits a constant control characteristic to control each of the suspension cylinders. Thus, the above-indicated U.S. Patent does not teach or suggest changing the control characteristic of the hydraulic control cylinder, depending upon a specific object of a suspension system including the suspension cylinders or devices. That is, the conventional hydraulic control cylinder is not versatile.

It is therefore an object of the present invention to provide a versatile hydraulic control apparatus.

Hereinafter, some examples of various modes of the present invention that are recognized as being claimable in the present application (hereinafter, referred to as the claimable modes, where appropriate) will be described and explained. The claimable modes include at least respective modes corresponding to the appended claims, but may additionally include broader or narrower modes of the present invention or even one or more different inventions than the present invention. Each of the following modes (1) through (7) is numbered like the appended claims, and depends from the other mode or modes, where appropriate, so as to help understand the claimable modes and to indicate and clarify possible combinations of elements or technical features thereof. It is, however, to be understood that the present invention is not limited to the elements or technical features of the following modes, or the combinations thereof, that will be described below for illustrative purposes only. It is to be further understood that each of the following modes should be construed in view of not only the explanations directly associated therewith and but also the detailed description of the preferred embodiments of the invention, and that in additional claimable modes, one or more elements or one or more technical features may be added to, or deleted from, any of the following specific modes.

(1) A hydraulic control apparatus for use in a suspension system of a vehicle having a plurality of wheels, the suspension system including, in addition to the hydraulic control apparatus, a plurality of hydraulic suspension devices which are provided for the wheels, respectively, the hydraulic control apparatus being connected to each of the hydraulic suspension devices so as to control an operation of the each hydraulic suspension device, the hydraulic control apparatus comprising a housing which has an inner space and includes a plurality of first sliding-related portions; a piston assembly which is provided in the inner space of the housing and includes at least one piston and a plurality of second sliding-related portions which cooperate with the first sliding-related portions, respectively, to provide a plurality of pairs of first and second sliding-related portions, respectively; and a plurality of elastically deformable sealing members each of which is supported by one of the first and second sliding-related portions of a corresponding one of the pairs, such that the each elastically deformable sealing member is slideable on an other of the first and second sliding-related portions of the corresponding one pair, wherein the pairs of first and second sliding-related portions and the elastically deformable sealing members cooperate with each other to separate the inner space of the housing into a plurality of hydraulic chambers which are connected to the hydraulic suspension devices, respectively, and each of which is filled with a hydraulic liquid, wherein when the piston assembly is moved in the housing in a movement direction, the each elastically deformable sealing member supported by the one of the first and second sliding-related portions of the corresponding one pair is slid on the other of the first and second sliding-related portions of the corresponding one pair, and a volume of the each hydraulic chamber is changed, and wherein at least one pair of first and second sliding-related portions of the pairs of first and second sliding-related portions exhibits, when the piston assembly is positioned, in the movement direction, at different positions relative to the housing, different resistances to the movement of the piston assembly relative to the housing.

In the present hydraulic control apparatus, at least one pair of first and second sliding-related portions has different resistances to the movement of the piston assembly relative to the housing. Therefore, the piston assembly is moved with different degrees of ease (or difficulty) when the piston assembly is positioned at different positions relative to the housing. Thus, the control characteristic of the present hydraulic control apparatus may be changed depending upon a specific object of the suspension system. Thus, according to the present invention, there is provided a versatile hydraulic control apparatus.

More specifically explained, the present hydraulic control apparatus has the plurality of hydraulic chambers whose respective volumes are changed by the movement of the piston assembly in the housing and which communicate with the plurality of hydraulic suspension devices (e.g., hydraulic suspension cylinders), respectively, that are provided for the plurality of wheels of the vehicle, respectively. The hydraulic suspension devices have respective hydraulic chambers each of which is filled with the hydraulic liquid. The hydraulic chambers of the hydraulic control apparatus are connected to the respective hydraulic chambers of the hydraulic suspension devices. The hydraulic suspension devices may be ones, such as shock absorbers, each of which produces a damping force by utilizing resistance to flows of a hydraulic liquid. Each of those suspension devices may include a housing, a piston, and a piston rod, and has such a construction that a pressure of the hydraulic liquid present in the hydraulic chamber is changed when the piston rod is extended from, or retracted into, the housing. For example, when the piston rod is extended from the housing, the hydraulic pressure of each suspension device is decreased; and when the piston rod is retracted into the housing, the hydraulic pressure of each suspension device is increased. In the case where the present hydraulic control apparatus is connected to the hydraulic suspension devices each of which has the hydraulic chamber whose hydraulic pressure is changed when the piston rod is extended from, or retracted into, the housing, the hydraulic pressure of each of the hydraulic chambers of the control apparatus becomes equal to the hydraulic pressure of the hydraulic chamber of a corresponding one of the suspension devices. On the other hand, in the hydraulic control apparatus, the hydraulic pressure of each of the hydraulic chambers thereof applies a force to a corresponding one of the one or more pistons of the piston assembly thereof, in an axial direction parallel to an axis line of the assembly. A resultant force of all axial-direction forces applied to the piston assembly as a whole, including the respective axial-direction forces applied to the one or more pistons by the respective hydraulic pressures of the hydraulic chambers, acts as "a moving force" to move the piston assembly in the axial direction. This moving force depends on the respective hydraulic pressures of the respective hydraulic chambers of the suspension devices. Thus, the piston assembly may not, or may, be moved depending upon whether the respective hydraulic pressures of the hydraulic chambers of the suspension devices are balanced with each other, or are not balanced.

How the above-indicated moving force is produced depends on respective constructions of the hydraulic suspension devices, pressure-receiving areas of the one or more pistons of the piston assembly, etc. Thus, the hydraulic suspension devices and/or the hydraulic control apparatus can be so designed that respective operations of the suspension devices may be controlled by the movement of the piston assembly according to a specific object of the suspension system. Owing to the designing of, e.g., the hydraulic control apparatus, the suspension system may be constructed such that, for example, when the vehicle is kept stopped, or is running straight forward on a road free of protuberances (hereinafter, referred to the "smooth road", where appropriate), the moving force becomes equal to substantially zero and accordingly the piston assembly is kept stopped at its neutral position; and, for example, when one or more wheels of the vehicle is or are moved vertically relative to the body of the vehicle and accordingly the hydraulic pressure or pressures of one or more suspension devices is or are changed, i.e., when the balance of the axial-direction forces applied to the piston assembly as a whole is broken, the moving force is produced to move the piston assembly in one of two opposite directions parallel to the axial direction of the piston assembly. However, the suspension system may be constructed such that when the hydraulic pressure or pressures of one or more suspension devices is or are changed, the piston assembly is not necessarily moved. For example, the suspension system may be constructed such that in the above-indicated case, the piston assembly may not be moved if the balance of the axial-direction forces applied to the piston assembly as a whole is kept depending upon how the respective hydraulic pressures of the suspension devices are not balanced.

As described above, in the present hydraulic control apparatus, the volume of each of the hydraulic chambers thereof is changed as the piston assembly is moved in the housing. Therefore, when the piston assembly is moved, the volume or volumes of one or more hydraulic chambers of the control apparatus is or are increased, and the volume or volumes of the other hydraulic chamber or chambers is or are decreased. Consequently the hydraulic liquid flows into the one or more hydraulic chambers whose volume or volumes is or are increased, and flows out of the hydraulic chamber or chambers of one or more suspension devices communicating with the one or more hydraulic chambers; and the hydraulic liquid flows out of the other hydraulic chamber or chambers whose volume or volumes is or are decreased, and flows into the hydraulic chamber or chambers of the other suspension device or devices communicating with the other hydraulic chamber or chambers. Because of the flowing-in or flowing-out of the hydraulic liquid, each of the suspension devices is operated by an amount corresponding to the amount of flowing-in or flowing-out of the hydraulic liquid. For example, the piston rod of each suspension device or cylinder is extended from, or retracted into, the housing thereof by the above-indicated amount. In addition, because of the flowing-in and flowing-out of the hydraulic liquid, the respective hydraulic pressures of the hydraulic chambers of the control apparatus are eventually balanced with each other. In other words, the piston assembly is moved till the respective hydraulic pressures of the hydraulic chambers are balanced and accordingly the moving force becomes equal to zero. Thus, the hydraulic control apparatus controls the respective operations of the hydraulic suspension devices such that the respective operations of the suspension devices interact with each other.

As described above, the present hydraulic control apparatus includes the plurality of elastically deformable sealing members each of which is supported by one of the first and second sliding-related portions of a corresponding one of the pairs, such that the each elastically deformable sealing member is slideable on the other of the first and second sliding-related portions. Therefore, the pairs of first and second sliding-related portions exhibit respective resistances to the movement of the piston assembly relative to the housing, i.e., the respective sliding actions of the corresponding elastically deformable sealing members. In the case where those resistances are small, the piston assembly can be easily moved and accordingly the control apparatus exhibits a quick response of the piston assembly to the moving force applied thereto by the change of the hydraulic pressure or pressures of one or more hydraulic chambers thereof. On the other hand, in the case where those resistances are great, the piston assembly cannot be easily moved and accordingly the control apparatus exhibits a slow response of the piston assembly to the moving force applied thereto. Thus, depending upon whether the above-indicated resistances are small or great, the control apparatus exhibits different control characteristics, more specifically described, different degrees of response to the moving force applied to the piston assembly.

If the above-indicated resistances to the movement of the piston assembly relative to the housing would be constant over the entire permitted movement range in which the piston assembly is permitted to move relative to the housing, the control characteristic of the hydraulic control apparatus would be constant over an entirety of a control range corresponding to the permitted movement range of the piston assembly. However, in some cases as will be described later, the control apparatus may be required to exhibit different control characteristics with respect to different portions of the control range, or exhibit a control characteristic that continuously changes with respect to at least a portion of the control range. The present hydraulic control apparatus can preferably meet those requirements. That is, the present hydraulic control apparatus can exhibit different resistances to the movement of the piston assembly, when the piston assembly are positioned at different positions, and accordingly can provide various control characteristics. Thus, the present hydraulic control apparatus is versatile.

In the present hydraulic control apparatus, the housing includes the plurality of first sliding-related portions, the piston assembly includes the plurality of second sliding-related portions which cooperate with the first sliding-related portions to provide the plurality of pairs of first and second sliding-related portions, and each of the plurality of elastically deformable sealing members is supported by one of the first and second sliding-related portions of a corresponding one of the pairs, such that the each elastically deformable sealing member is slideable on the other of the first and second sliding-related portions. For example, one pair of first and second sliding-related portions may be constituted by a portion of one piston and a portion of an inner surface of the housing. More specifically described, an elastically deformable sealing member may be supported by an outer peripheral portion of one piston, such that the sealing member is slideable on the inner surface of the housing. In this case, a main portion of the piston may be constituted by the sealing member. Alternatively, one pair of first and second sliding-related portions may be constituted by a portion of an outer surface of the piston assembly, and a portion of the housing such as a partition wall of the housing, according to, e.g., the mode (5) described later. More specifically described, an elastically deformable sealing member may be supported by the partition wall of the housing, such that the sealing member is slideable on the outer surface of the piston assembly.

The present hydraulic control apparatus exhibits different resistances to the movement of the piston assembly, when the piston assembly is positioned at different positions. To this end, at least one pair of first and second sliding-related portions may exhibit different resistances, for example, different frictional resistances, to the sliding of the corresponding elastically deformable sealing member, when the piston assembly is positioned at different positions. More specifically described, at least one pair of first and second sliding-related portions may include different portions having different frictional coefficients, or may press the corresponding elastically deformable sealing member against each other, with different forces, when the piston assembly is positioned at different positions.

The present hydraulic control apparatus may be adapted to control two or more suspension cylinders that are respectively provided for two or more wheels out of a plurality of wheels of a vehicle.

(2) The hydraulic control apparatus according to the mode (1), wherein the housing has a cylindrical shape and the piston assembly has a circular transverse cross section, wherein one of the first and second sliding-related portions of the at least one pair supports a corresponding one of the elastically deformable sealing members such that the corresponding one elastically deformable sealing member is slideable on a circumferential surface of an other of the first and second sliding-related portions of the at least one pair, and wherein a diameter of the circumferential surface of the other of the first and second sliding-related portions of the at least one pair changes in the movement direction so that the circumferential surface has the different resistances.

Each of the elastically deformable sealing members may be formed of an elastic material such as rubber. In this case, the first and second sliding-related portions of each pair cooperate with each other to compress the corresponding elastically deformable sealing member in a diametric direction thereof and thereby elastically deform the same. In this state, the piston assembly can be liquid-tightly moved relative to the housing. As the degree of compression of the sealing member increases, the forces with which the first and second sliding-related portions compress the sealing member increase, and accordingly the resistances to the sliding of the sealing member, i.e., the movement of the piston assembly increase. On the other hand, as the degree of compression of the sealing member decreases, the resistances to the movement of the piston assembly decrease. According to this mode (2), the diameter of the circumferential surface of the other of the first and second sliding-related portions, on which the sealing member is slideable, changes in the movement direction so that the circumferential surface has the different resistances. Thus, the present hydraulic control apparatus has the different resistances with respect to at least a portion of the permitted movement range of the piston assembly, and accordingly the control apparatus has different control characteristics with respect to at least a portion of the control range thereof.

The degree of compression of the sealing member may be adjusted by changing a dimension of a space in which the sealing member is provided, in a diametric direction of the housing or the piston assembly, i.e., a size of a clearance provided between the first and second sliding-related portions. To this end, it is preferred to change the diameter of the circumferential surface on which the sealing member is slideable, in the movement direction in which the piston assembly is moved relative to the housing. For example, in the case where the sealing member is supported by the piston assembly and is slid on the inner circumferential surface of the housing, the diameter of the inner circumferential surface of the housing may be changed in the movement direction so that the inner circumferential surface may have the different resistances to the movement of the piston assembly. In this case, as the diameter of the inner circumferential surface of the housing decreases, the degree of compression of the sealing member increases, and accordingly the resistance to the sliding of the sealing member on the inner circumferential surface of the housing increases, so that the difficulty with which the piston assembly is moved relative to the housing increases. In addition, in the case, described later, where the housing includes a partition wall and the sealing member is supported by the partition wall and is slid on the outer circumferential surface of a portion of the piston assembly, the diameter of the outer circumferential surface of the portion of the piston assembly may be changed in the movement direction so that the outer circumferential surface may have the different resistances to the movement of the piston assembly. In this case, as the diameter of the outer circumferential surface increases, the resistance to the sliding of the sealing member on the outer circumferential surface increases, so that the difficulty with which the piston assembly is moved relative to the housing increases.

(3) The hydraulic control apparatus according to the mode (1) or (2), wherein the at least one pair of first and second sliding-related portions includes a first resistant portion and at least one second resistant portion which are located adjacent to each other in the movement direction and have two different resistances, respectively.

For example, in the case where the first resistant portion has the greater resistance than that of the one or more second resistant portions located adjacent to the first resistant portion, the first resistant portion can lower the speed of movement of the piston assembly, i.e., increase the difficulty with which the piston assembly is moved. That is, the first resistant portion can lower the speed of response of the hydraulic control apparatus to control the hydraulic suspension devices. The hydraulic control apparatus may be designed such that the sealing member is positioned on the first resistant portion having the greater resistance, when the piston assembly takes a reference position thereof relative to the housing. The reference position may be a neutral position which is taken by the piston assembly relative to the housing in, e.g., a state in which the vehicle is kept stopped or a state in which the vehicle is running straight forward on a smooth road.

In addition, in the case where the present hydraulic control apparatus is used to control four hydraulic suspension cylinders respectively provided for four wheels of a vehicle, in such a manner that a first pair of suspension cylinders located on a first diagonal line of a body of the vehicle are operates in a same direction and a second pair of suspension cylinders located on a second diagonal line of the vehicle's body are operated in a same direction, the sealing member can be positioned on the first resistant portion having the greater resistance, when the piston assembly takes the above-indicated neutral position relative to the housing. For example, when the vehicle is running straight forward on smooth road, the piston assembly takes the neutral position in the hydraulic control apparatus. If the above-described moving force to move the piston assembly in the axial direction thereof, i.e., the above-described movement direction is small, the piston assembly is moved by a small amount only, or is not moved. Therefore, the four suspension cylinders can operate substantially independent of each other. More specifically described, for example, when the vehicle is running straight forward on smooth road, the respective hydraulic pressures of the four suspension cylinders are changed by respective small amounts only by small protuberances on the road surface. Therefore, in this case, there are substantially no needs for the control apparatus to control the suspension cylinders. Hence, when the piston assembly takes the neutral position, the responsiveness of control or operation of the control apparatus is lowered to increase the running stability of the vehicle. However, if the moving force exceeds the above-indicated great resistance of the first resistant portion, the piston assembly is moved, against the great resistance of the first resistant portion, to the second resistant portion away from the neutral position. Since the second resistant portion has the smaller resistance to the movement of the piston assembly, the control apparatus exhibits a higher responsiveness to control the suspension cylinders. Therefore, when one of the wheels rides on a large protuberance on road surface, the one wheel can be easily moved upward and the other wheels can be easily moved upward or downward. Thus, the wheels can enjoy an improved road-holding capability when one of the wheels rides on protuberance. Since the piston assembly cannot be easily moved from its neutral position relative to the housing, a good running stability of the vehicle is obtained when the vehicle runs on smooth road, and an improved road-holding performance of the wheels is obtained when the vehicle runs on rough road.

The present hydraulic control apparatus may be designed to have a greater resistance to the movement of the piston assembly, with respect to at least one of opposite end portions of the permitted movement range of the piston assembly. In this case, the speed of movement of the piston assembly is lowered when the piston assembly is moved around the one or two end portions of the movement range. For example, in the case where the piston assembly is moved to each one of the opposite end portions of the movement range and is stopped by abutment thereof on a portion of the housing, the speed of movement of the piston assembly is lowered because of the greater resistance of the each end portion of the movement range, and accordingly the piston assembly abuts on the housing at the lowered speed.

(4) The hydraulic control apparatus according to the mode (1) or (2), wherein the at least one pair of first and second sliding-related portions includes at least one resistant portion having the different resistances which continuously change in the movement direction.

The present hydraulic control apparatus has different resistances which continuously change (increase or decrease) in the movement direction, with respect to at least a portion of the permitted movement range of the piston assembly. For example, in the case where the control apparatus has, with respect to a portion of the movement range, different resistances which continuously increase in a direction from the neutral position toward one of the opposite end portions of the movement range, the difficulty with which the piston assembly is moved relative to the housing increases when the piston assembly is moved in the direction away from the neutral position toward the one end portion. Thus, the control apparatus has such a control characteristic that as the piston assembly approaches the one end portion of the movement range, the moving force needed to move the piston assembly increases. Owing to this control characteristic, for example, in the case where the piston assembly is moved to each one of the opposite end portions of the movement range and is stopped by abutment thereof on a portion of the housing, the piston assembly abuts on the housing at a lowered speed.

The present hydraulic control apparatus may further comprise a biasing device or mechanism which applies, to the piston assembly, a biasing force to bias the piston assembly toward the above-described neutral position thereof, for the purpose of, e.g., returning the piston assembly back to the neutral position. In the case where the mode (4) is applied to this type of hydraulic control apparatus, it is preferred that the resistances to the movement of the piston assembly be increased in a direction from the neutral position, or positions around the neutral position, toward one of the opposite end portions of the movement range. For example, in the case where the above-described biasing mechanism includes one or more springs to apply the above-indicated biasing force to the piston assembly, the biasing force increases as the piston assembly approaches the one end portion of the movement range. Therefore, when the piston assembly is moved back from positions around the one end portion of the movement range toward the neutral position, the speed of movement of the piston assembly might otherwise exceed a reasonable upper limit. This adverse effect of the spring or springs can be removed by employing the above-indicated arrangement in which the resistances continuously increase as the piston assembly approaches the one end portion of the movement range, and thereby preventing the piston assembly from being moved toward the neutral position at excessively high speeds.

According to the mode (4), the resistances to the movement of the piston assembly may be continuously changed between the two opposite end portions of the movement range, i.e., over the substantially entire movement range. In this case, the hydraulic control apparatus has such a control characteristic that as the piston assembly approaches each one of the opposite end portions of the movement range, the moving force (i.e., the imbalance of the hydraulic pressures) needed to move the piston assembly increases.

The manner in which the resistances continuously change in the movement direction may be such that the resistances are linearly proportional with the amounts of movement of the piston assembly, that is, the resistances change at a constant rate of change. However, the hydraulic control apparatus may be designed to have resistances which continuously change at a variable rate of change. More specifically explained, for example, the rate of change may increase or decrease as the amounts of movement of the piston assembly increase. In order to provide the control apparatus with the resistances which continuously change (increase or decrease) in the movement direction, it is preferred to continuously change, in the movement direction, the diameter of a circumferential surface on which the sealing member is slid.

(5) The hydraulic control apparatus according to any of the modes (1) through (4), wherein the housing has a cylindrical shape and the piston assembly has a circular transverse cross section, wherein the housing includes a partition wall having a through-hole, and the piston assembly includes two pistons and a connecting member which extends through the through-hole of the partition wall and supports, at two opposite end portions thereof, the two pistons, respectively, so as to connect the two pistons, wherein the partition wall supports one of the elastically deformable sealing members such that said one elastically deformable sealing member is slideable on an outer circumferential surface of the connecting member, and the two pistons support two elastically deformable sealing members of the elastically deformable sealing members, respectively, such that each of the two elastically deformable sealing members is slideable on an inner circumferential surface of the housing, wherein the first sliding-related portions comprise the partition wall and the inner circumferential surface of the housing, and the second sliding-related portions comprise the two pistons and the outer circumferential surface of the connecting member, and wherein the partition wall, the inner circumferential surface of the housing, the two pistons, the outer circumferential surface of the connecting member, and the three elastically deformable sealing members cooperate with each other to separate the inner space of the housing into four hydraulic chambers as the hydraulic chambers.

According to this mode (5), the above-indicated at least one pair of first and second sliding-related portions that exhibits the different resistances may comprise the partition wall of the housing and the outer circumferential surface of the connecting member.

The present hydraulic control apparatus has a specific construction. Therefore, for example, when the vehicle pitches, the piston assembly is not moved in the housing and accordingly four hydraulic suspension cylinders as the hydraulic suspension devices normally are controlled to operate independent of each other; and when one of the wheels rides on protuberance on road surface, the piston assembly is moved in the housing and accordingly the suspension cylinder, located on the same diagonal line as the diagonal line on which the suspension cylinder corresponding to the one wheel is located, is controlled to operate, in response to the operation of the suspension cylinder corresponding to the one wheel, in the same direction as the direction in which the suspension cylinder corresponding to the one wheel is operated, and the other two suspension cylinders are controlled to operate in an opposite direction to the direction in which the suspension cylinder corresponding to the one wheel is operated. Thus, the present hydraulic control apparatus can limit the lowering of the road-holding performance of the wheels when the vehicle runs on rough road. According to this mode (5), too, the hydraulic control apparatus can exhibit different resistances to the movement of the piston assembly, when the piston assembly is positioned at different positions, and accordingly the control apparatus can have different control characteristics corresponding to different objects.

Aside from the mode (5), the hydraulic control apparatus may be modified such that the piston assembly includes three pistons and a connecting member connecting the three pistons and cooperates with the housing to separate the inner space of the housing into four hydraulic chambers each of which is filled with a hydraulic liquid. In this case, the housing is not provided with the above-indicated partition wall, but the three pistons of the piston assembly divide the inner space of the housing into the four hydraulic chambers. This modified hydraulic control apparatus can also be designed to have different resistances to the movement of the piston assembly.

(6) A suspension system for use in a vehicle having a body and a plurality of wheels, the suspension system comprising a hydraulic control apparatus according to any of the modes (1) through (5); and a plurality of hydraulic suspension devices which are provided for the wheels, respectively, wherein the hydraulic control apparatus is connected to each of the hydraulic suspension devices so as to control an operation of said each hydraulic suspension device.

The present suspension system can enjoy the same advantages as the above-explained advantages of the hydraulic control apparatus in accordance with any of the modes (1) through (5).

(7) The suspension system according to the mode (6), wherein each of the hydraulic suspension devices comprises a cylindrical housing which is connected to one of the body and a corresponding one of the wheels; a piston which cooperates with the cylindrical housing to define, on either side of the piston, two chambers one of which is filled with the hydraulic liquid and communicates with a corresponding one of the hydraulic chambers of the hydraulic control apparatus; and a piston rod which is connected, at one of opposite ends thereof, to the piston, and is connected, at an other of the opposite ends thereof, to an other of the body and said corresponding one wheel.

The other of the two chambers of each of the hydraulic suspension devices may, or may not, be filled with the hydraulic liquid. In the case where the other chamber is filled with the hydraulic liquid, the piston may have an orifice passage which permits flows of the hydraulic liquid to pass between the two chambers. The piston rod may be arranged to extend through either one of the two chambers.

### BRIEF DESCRIPTION OF THE DRAWINGS

The above and optional objects, features, and advantages of the present invention will be better understood by reading the following detailed description of the preferred embodiments of the invention when considered in conjunction with the accompanying drawings, in which:
Fig. 1 is a diagrammatic view of a suspension system including a hydraulic control cylinder as a first embodiment of the present invention;
Fig. 2 is a cross-section view of the control cylinder;
Fig. 3 is a cross-section view of a piston assembly of the control cylinder; and
Fig. 4 is a cross-section view corresponding to Fig. 2, showing another hydraulic control cylinder as a second embodiment of the present invention.

### DETAILED DESCRIPTION OF THE PREFERRED EMBODIMENTS

Hereinafter, there will be described preferred embodiments of the present invention by reference to the drawings.

### 1. Suspension System of a Vehicle

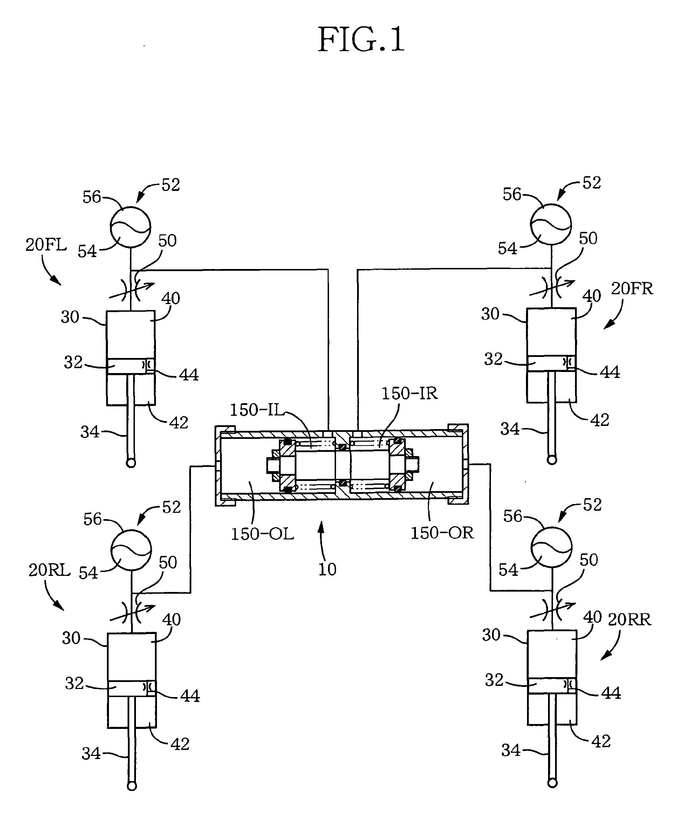

Fig. 1 diagrammatically shows a hydraulic control cylinder 10 as an embodiment of a hydraulic control apparatus of the present invention, and a portion of a suspension system of a vehicle which portion is related to the hydraulic control cylinder 10. The suspension system includes, in addition to the hydraulic control cylinder 10, four hydraulic suspension cylinders 20 (20FL, 20FR, 20RL, 20RR) that are respectively provided for four wheels of the vehicle. The four hydraulic suspension cylinders correspond to hydraulic suspension devices. Each of the four suspension cylinders 20 is provided between a body of the vehicle and a corresponding one of the four wheels, and functions as a shock absorber that produces a damping force when the one wheel is moved upward and downward, i.e., is moved toward, and away from, the body. Each one of the suspension cylinders 20 is so designed as to be able to operate independent of the other suspension cylinders 20. In the suspension system, however, each one of the suspension cylinders 20 is connected to the control cylinder 10, and the operation of the each suspension cylinder 20 is controlled by the control cylinder 10, according to the respective operations of the other suspension cylinders 20. In the following description, various elements (e.g., the four wheels or the four suspension cylinders) are designated, where appropriate, by respective symbols representing their positions in the vehicle, i.e., FL representing a front and left position, FR representing a front and right position, RL representing a rear and left position, and RR representing a rear and right position. Although those symbols may be used solely or in combination with reference numerals, all those symbols are used just for easier understanding purposes only.

### 2. Suspension Cylinders

The four suspension cylinders 20 (20FL, 20FR, 20RL, 20RR) have an identical construction. More specifically described, each of the suspension cylinders 20 includes a housing 30; a piston 32 that is fluid-tightly and slideably provided in the housing 30; and a piston rod 34 that is connected, at one of axially opposite end portions thereof, to the piston 32, and projects, at the other end portion thereof, out of the housing 30. The housing 30 of each suspension cylinder 20 is connected to the body of the vehicle, and the other end portion of the piston rod 34 is connected to the corresponding wheel. Thus, when the wheel is moved upward or downward relative to the vehicle's body, the piston 32 and the piston rod 34 are moved relative to the housing 30, i.e., the piston rod 34 is retracted into the housing 20, or is extended from the same 20. An inner space of the housing 30 is separated by the piston 32 into two hydraulic chambers 40, 42, and the piston 32 has a communication or orifice passage 44 that has a restrictive portion and communicates the two hydraulic chambers 40, 42 with each other. As the piston 32 is moved in the housing 30, a hydraulic liquid filling the two chambers 40, 42 flows through the orifice passage 44 from one of the two chambers 40, 42 into the other chamber while being resisted by the restrictive portion of the passage 44. Owing to the resistance to the flows of the hydraulic liquid, each suspension cylinder 20 produces the damping force.

The first hydraulic chamber 40 of each suspension cylinder 20 that does not accommodate the piston rod 34 is connected to a hydraulic-liquid accumulator 52 via a variable throttle valve 50 a degree of opening of which is variable. Each of the four accumulators 52 have an identical construction. More specifically described, each accumulator 52 includes a hydraulic chamber 54 that communicates with the first hydraulic chamber 40 of the corresponding suspension cylinder 20, and a gas chamber 56 that is gas-tightly filled with a gas. Thus, each accumulator 52 can permit the hydraulic liquid to flow into, or out of, the hydraulic chamber 54, according to circumstances. The hydraulic liquid present in the hydraulic chamber 54 receives a pressure of the gas filling the gas chamber 56 which pressure corresponds to an amount of the hydraulic liquid present in the hydraulic chamber 54. Since an inner volume of the first hydraulic chamber 40 of each suspension cylinder 20 is changed by an amount of projection of the piston rod 34 out of the housing 30, the hydraulic liquid can flow from the first hydraulic chamber 40 into the hydraulic chamber 54 of the corresponding accumulator 52 via the variable throttle valve 50, or vice versa. For example, when a distance between the vehicle's body and each wheel decreases and accordingly the amount of projection of the piston rod 34 from the housing 30 decreases, the inner volume of the first hydraulic chamber 40 decreases and accordingly the hydraulic liquid flows from the hydraulic chamber 40 to the accumulator 52. The amount of opening of the variable throttle valve 50 can be adjusted to apply, to the hydraulic liquid flowing between the hydraulic chamber 40 and the accumulator 52, an appropriate resistance to the flow of the fluid. Thus, the variable throttle valve 50 has the function of adjusting the damping force produced by the suspension cylinder 20 as the shock absorber.

### 3. Hydraulic Control Cylinder

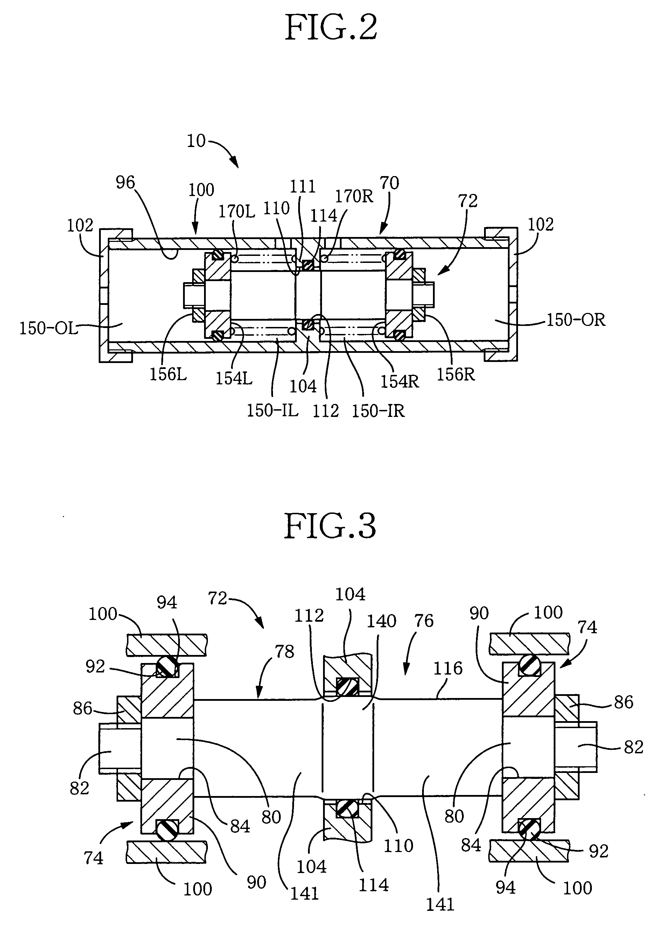

As shown in Fig. 2, the hydraulic control cylinder 10 includes a cylindrical housing 70 (hereinafter, abbreviated to the "housing 70", where appropriate), and a piston assembly 72 that is moveable within an inner space of the housing 70. As shown in Fig. 3, the piston assembly 72 is constituted by two pistons 74, and a connection shaft 76 that connects between the two pistons 74. The connection shaft 76 includes a main portion 78 as an intermediate portion thereof, and additionally includes, in each of axially opposite end portions thereof, a fitting portion 80 and a threaded portion 82 that have respective diameters smaller than a diameter of the main portion 78. Each of the two pistons 74 has a through-hole 84 in which a corresponding one of the two fitting portions 80 of the connection shaft 76 is closely fitted such that a corresponding one of the two threaded portions 82 projects out of the through-hole 84. Then, two nuts 86 are screwed on, and engaged with, the two threaded portions 82 projecting from the two pistons 74. Thus, the two pistons 74 are fixed to, and supported by, the connection shaft 72. The connection shaft 76 corresponds to a connecting member.

The two pistons 74 have an identical construction. More specifically described, each of the two pistons 74 includes a main body 90, and an elastically deformable O-ring 92 as a sealing member. An outer diameter of the main body 90 is smaller than an inner diameter of the housing 70, so as to provide, in a radial direction of the two elements 90, 70, a clearance between the two elements 90, 70. The main body 90 has, in an outer circumferential surface thereof, an annular groove 94 that has a dimension in a radial dimension thereof, i.e., a depth that is smaller than a dimension in an axial direction thereof, i.e., a width. The annular groove 94 receives the O-ring 92 whose cross section is greater than the depth of the groove 94. Thus, an outer circumferential portion of the O-ring 92, received by the annular groove 94, projects from the outer circumferential surface of the main body 90. In a state before the piston assembly 72 is assembled with the housing 70, an outer diameter of the O-ring 92 is greater than the inner diameter of the housing 70. On the other hand, in a state in which the piston assembly 72 is fitted in the housing 70, the O-ring 92 is elastically compressed by, and between, the housing 70 and the annular groove 94, in a radial direction of the piston 74. Thus, an entire outer circumferential surface of the O-ring 92 is held in liquid-tight contact with an inner circumferential surface 96 of the housing 70. More specifically described, the O-ring 92 is elastically compressed to fill the clearance provided between the piston 74 and the housing 70, so that the piston 74 and the housing 70 may liquid-tightly move relative to each other, i.e., liquid-tightly slide on each other. Two portions of the inner surface 96 of the housing 70 on which the two O-rings 92 supported by the two pistons 74 liquid-tightly slide, respectively, provide two first sliding-related portions of the housing 70.

The housing 70 includes a cylindrical member 100 and two cap members 102. The two cap members 102 are screwed on, and engaged with, two axially opposite end portions of the cylindrical member 100, respectively, so as to liquid-tightly close respective openings of the two end portions. The cylindrical member 100 has, in an axially middle portion thereof, an annular partition wall 104 that separates the inner space of the housing 70 into two portions. The annular partition wall 104 has a through-hole 110 through which the connection shaft 76 extends. A diameter of the through-hole 110 is greater than the diameter of the connection shaft 76, so as to provide an appropriate clearance between the annular partition wall 104 and the connection shaft 76, in a radial direction of the shaft 76. An inner circumferential portion 111 of the annular partition wall 104 that defines the through-hole 110 has an annular groove 112 that has a dimension in a radial direction thereof, i.e., a depth that is smaller than a dimension in an axial direction thereof, i.e., a width thereof. The annular groove 112 receives an O-ring 114 as an elastically deformable sealing member whose cross section is greater than the depth of the groove 112. Thus, an inner circumferential portion of the O-ring 114 projects out of the annular groove 112. The O-ring 114 can be said as a portion of the annular partition wall 104. In a state before the connection shaft 76 is fitted in the through-hole 110, an inner diameter of the O-ring 114 is smaller than a diameter of the connection shaft 76. On the other hand, in a state in which the connection shaft 76 extends through the through-hole 110, the O-ring 114 is elastically compressed by, and between, the main portion 78 of the connection shaft 76 and the annular groove 112 of the partition wall 104, in a radial direction of the O-ring 114. Thus, an entire inner circumferential surface of the O-ring 114 is held in liquid-tight contact with an outer circumferential surface 116 of the main portion 78. More specifically described, the O-ring 114 is elastically compressed to fill the clearance present between the inner portion 111 and the main portion 78, so that the annular partition wall 104 and the connection shaft 76 may liquid-tightly move relative to each other, i.e., liquid-tightly slide on each other. A portion of the outer surface 116 of the connection shaft 76 on which the sealing member 114 supported by the partition wall 104 liquid-tightly slides provides a second sliding-related portion of the piston assembly 72.

In the present embodiment, the connection shaft 76 includes, in an axially middle portion thereof, a large-diameter portion 140, and additionally includes two small-diameter portions 141 located on either side of the large-diameter portion 140 in a movement direction in which the piston assembly 72 is moved relative to the housing 70. In Fig. 3, a diameter of the large-diameter portion 140 is exaggerated. The diameter of the large-diameter portion 140 is smaller than the diameter of the through-hole 110, and accordingly an appropriate clearance is present between the large-diameter portion 140 and the annular partition wall 104. Since, however, the clearance present between the large-diameter portion 140 and the annular partition wall 104 is smaller than a clearance present between each of the small-diameter portions 141 and the partition wall 104, the O-ring 114 is elastically deformed or compressed more largely when the O-ring 114 supported by the partition wall 104 slides on the large-diameter portion 140 than when the O-ring 114 slides on each of the small-diameter portions 141. Thus, when the partition wall 104 slides on the large-diameter portion 140, the O-ring 114 is more strongly pressed against the connection shaft 76, and accordingly a greater frictional force is produced between the O-ring 114 and the connection shaft 76. Thus, when the O-ring 114 supported by the partition wall 104 slides on the large-diameter portion 140 of the connection shaft 76, a greater resistance is exhibited against the sliding of the O-ring 114 on the connection shaft 76 than a resistance exhibited when the O-ring 114 slides on each of the small-diameter portions 141.

An inner space of the hydraulic control cylinder 20 is separated by the piston assembly 72 provided therein, into four hydraulic chambers 150 (150OL, 150IL, 150IR, 150OR). Symbols "L" and "R" represent a left-hand position and a right-hand position in the vehicle, respectively; and symbols "O" and "I" represent an axially outer position and an axially inner position in the housing 70, respectively. More specifically described, the two pistons 74 and the partition wall 104 cooperate with each other to define the two inner hydraulic chambers 150IL, 150IR; and the two pistons 74 and the two cover members 102 cooperate with each other to define the two outer hydraulic chambers 150OL, 150OR. The four hydraulic chambers 150 are connected to, and communicated with, the four suspension cylinders 20, respectively, via respective ports (i.e., holes) formed through a wall of in the housing 70. More specifically described, in the present embodiment, the two inner hydraulic chambers 150IL, 150IR are connected to the two front suspension cylinders 20FL, 20FR, respectively; and the two outer hydraulic chambers 150OL, 150OR are connected to the two rear suspension cylinders 20RL, 20RR, respectively. Thus, when a hydraulic pressure in the hydraulic chamber 40 of each of the four suspension cylinders 20 changes, a hydraulic pressure in a corresponding one of the four hydraulic chambers 150 of the control cylinder 10 changes.

The piston assembly 72 has two inner pressure-receiving surfaces 154L, 154R that receive the respective hydraulic pressures in the two inner hydraulic chambers 150IL, 150IR, and two outer pressure-receiving surfaces 156L, 156R that receive the respective hydraulic pressures in the two outer hydraulic chambers 150OL, 150OR. Thus, the piston assembly 72 receives, at each of the four pressure-receiving surfaces 154, 156 thereof, a force exerted thereto in an axial direction of the piston assembly 72 by the pressure of the hydraulic liquid present in a corresponding one of the four hydraulic chambers 150. A resultant force as a sum of the four axial-direction forces provides a moving force to move the piston assembly 72 in the axial direction thereof in the housing 70. More strictly described, respective biasing forces produced by two springs 170 as elastic biasing members, described later, provide a portion of the moving force. When the respective hydraulic pressures in the four hydraulic chambers 150 change, the axial-direction forces exerted to the two pistons 74 also change.

In the present embodiment, each of the two springs 170L, 170R is provided between the annular partition wall 104 and a corresponding one of the two pistons 74. Each of the two springs 170 produces the biasing force to bias the piston assembly 72 toward a neutral position thereof. Thus, in the present hydraulic control cylinder 10, the piston assembly 72 can be easily positioned at its neutral position.

### 4. Operation of Suspension System

In the suspension system, the four hydraulic chambers 150 of the hydraulic control cylinder 10 communicate with the corresponding first hydraulic chambers 40 of the four suspension cylinders 20 and the corresponding hydraulic chambers 54 of the four accumulators 52. Theoretically, the respective hydraulic pressures in the four hydraulic chambers 150, the four first hydraulic chambers 40, and the four hydraulic chambers 54 can become equal to each other. Thus, the hydraulic liquid in the first hydraulic chamber 40 of each of the four suspension cylinders 20 can flow into a corresponding one of the four hydraulic chambers 150 and the hydraulic chamber 54 of a corresponding one of the four accumulators 52. In an equilibrium state of the suspension system in which the respective hydraulic pressures in the respective hydraulic chambers 40 of the four suspension cylinders 20 are equal to each other and accordingly the piston assembly 72 of the control cylinder 10 does not move in the housing 70, the hydraulic liquid flows between the hydraulic chamber 40 of each of the four suspension cylinders 20 and the hydraulic chamber 54 of a corresponding one of the four accumulators 52. Thus, each one of the suspension cylinders 20 can operate independent of the other suspension cylinders 20. In contrast, in the case where the piston assembly 72 moves in the housing 70, the hydraulic liquid flows between the hydraulic chamber 40 of each of the four suspension cylinders 20 and a corresponding one of the four hydraulic chambers 150 of the control cylinder 10. Thus, each suspension cylinder 20 cooperates with the other suspension cylinders 20 by an amount corresponding to the amount of flowing of the hydraulic liquid between the hydraulic chamber 40 of the each suspension cylinder 20 and the corresponding hydraulic chamber 150 of the control cylinder 10.

More specifically described, when the vehicle pitches, e.g., when respective distances between the vehicle' body and the two front wheels increase and respective distances between the vehicle' body and the two rear wheels decrease, because the vehicle is abruptly accelerated, the respective hydraulic pressures in the respective hydraulic chambers 40 of the two suspension cylinders 20FL, 20FR corresponding to the two front wheels decrease; and the respective hydraulic pressures in the respective hydraulic chambers 40 of the two suspension cylinders 20RL, 20RR corresponding to the two rear wheels increase. In this case, the four forces exerted to the piston assembly 72 are balanced, and accordingly no moving force to move the piston assembly 72 is produced. Thus, the piston assembly 72 is not moved. In the case where the piston assembly 72 does not move, each one of the suspension cylinders 20 operates independent of the other suspension cylinders 20.

On the other hand, when the vehicle rolls, e.g., when respective distances between the vehicle' body and the two left wheels increase and respective distances between the vehicle' body and the two right wheels decrease, because the vehicle is turned or steered in a leftward direction, the respective hydraulic pressures in the respective hydraulic chambers 40 of the two suspension cylinders 20FL, 20RL corresponding to the two left wheels decrease; and the respective hydraulic pressures in the respective hydraulic chambers 40 of the two suspension cylinders 20FR, 20RR corresponding to the two right wheels increase. In this case, usually, whether a moving force is produced to move the piston assembly 72 and in which direction the moving force produced moves the piston assembly 72 depend on various factors such as the respective hydraulic pressures in the four hydraulic chambers 150, respective areas of the four pressure-receiving surfaces 154, 156, etc. In the present embodiment, the suspension cylinders 20, the accumulators 2, and the control cylinder 10 are constructed such that when the vehicle rolls, the piston assembly 72 does not move relative to the housing 70.

Next, in the case where a distance between one of the four wheels and the vehicle's body increases or decreases, for example, in the case where a distance between the left, front wheel and the vehicle's body decreases because the left front wheel rides on a protuberance on a road surface, the piston rod 34 of the suspension cylinder 20FL provided for the left front wheel is retracted into the housing 30, and accordingly the hydraulic pressure in the hydraulic chamber 40 increases. Hence, the inner hydraulic chamber 150IL connected to the suspension cylinder 20FL increases, and accordingly the force exerted to the inner pressure-receiving surface 154L of the piston 74L increases. Since the respective hydraulic pressures in the other, three hydraulic chambers 150OL, 150IR, 150OR do not change, the four forces exerted to the piston assembly 72 become imbalanced, and a moving force as a resultant force of the four forces is produced to move the piston assembly 72 in a leftward direction. Thus, the piston assembly 72 is moved in the leftward direction till the four forces exerted to the piston assembly 72 become balanced with each other. As the piston assembly 72 is moved leftward, the respective volumes of the inner hydraulic chamber 150IR and the outer hydraulic chamber 150OL decrease, and the volume of the outer hydraulic chamber 150OR increases. Thus, the respective hydraulic liquids flowing out of the inner hydraulic chamber 150IR and the outer hydraulic chamber 150OL flow into the suspension cylinders 20FR, 20RL respectively connected to those chambers 150IR, 150OL. Therefore, the respective piston rods 34 of those suspension cylinders 20FR, 20RL are extended from the respective housings 30. On the other hand, since the volume of the outer hydraulic chamber 150OR increases, the chamber 150OR receives the hydraulic liquid from the suspension cylinder 20RR connected to that chamber 150OR. Therefore, the piston rod 34 of the suspension cylinder 20RR is retracted into the housing 30. In short, as the piston assembly 72 moves, the suspension cylinders 20FL, 20RR located on a first diagonal line of the body of the vehicle contract, and the suspension cylinders 20FR, 20RL located on a second diagonal line of the vehicle's body expand. In this way, when the left front wheel rides on the protuberance on the road surface, all the other three wheels can hold the road surface in a well balanced manner. Thus, the four wheels as a whole can enjoy an improved road-holding performance.

As is apparent from the foregoing description, the control cylinder 10 controls the four suspension cylinders 20 in such a manner that the two suspension cylinders 20 located on each of the two diagonal lines of the vehicle operate in a same direction and the two suspension cylinders 20 one of which is adjacent to each suspension cylinder 20 in the widthwise direction of the vehicle and the other of which is adjacent to the each cylinder 20 in the lengthwise direction of the vehicle operate in a direction opposite to the direction in which the each cylinder 20 operates. Owing to this manner of control or operation of the control cylinder 10, when the vehicle runs on, e.g., a rough road, the change of posture of the vehicle's body can be reduced, and the road-holding performance of the four wheels can be improved. In the above-indicated exemplified case, the control cylinder 10 controls the four suspension cylinders 20 such that the hydraulic liquid flows out of the two suspension cylinders 20FL, 20RR and flows into the other, two suspension cylinders 20FR, 20RL. Thus, it can be said that the suspension cylinders 20FL, 20RR communicate with the suspension cylinders 20FR, 20RL via the control cylinder 10 and the hydraulic liquid flows from the two suspension cylinders 20FL, 20RR and flows into the other, two suspension cylinders 20FR, 20RL. In addition, it can be said that the control cylinder 10 controls the four suspension cylinders 20 such that the respective operations of the suspension cylinders 20 interact with each other.

### 5. Large-Diameter Portion of Connection Shaft and Control Characteristics of Control Cylinder

As described above, the main portion 78 of the connection shaft 76 includes the large-diameter portion 140. Therefore, in a state in which the piston assembly 72 is positioned at its neutral position or a position around the neutral position (hereinafter, simply referred as the "central position", where appropriate), the large-diameter portion 140 of the connection shaft 76 liquid-tightly slides on the inner circumferential surface of the O-ring 114 held by the partition wall 104, against the greater resistance to the sliding. Thus, it is difficult for the piston assembly 72 to move away from the central position. That is, in the present embodiment, the central position of the permitted movement range in which the piston assembly 72 is permitted to move relative to the housing 70 has the greater resistance. Therefore, when any of the suspension cylinders 20 contracts or expands because of, e.g., a stone or a roughness on road surface, the movement of the piston assembly 72 is limited and the respective operations of the other suspension cylinders 20 are restrained. In short, when the vehicle runs on a smooth road free of protuberances or waves and accordingly the suspension cylinders 20 need not operate in the interacting manner, the control cylinder 10 controls those suspension cylinders 20 not to operate in the interacting manner. Thus, the suspension cylinders 22 operate independent of each other, and the driver can feel an excellent driving comfort.

On the other hand, when one of the four wheels rides on the protuberance as described above, a great moving force is produced, so that the piston assembly 72 is moved from the central position against the greater resistance. Thus, the four suspension cylinders 20 are controlled in the above-described manner, and the four wheels enjoy an improved road-holding performance. In summary, when the vehicle runs on the rough road, the control cylinder 10 contributes to improving the stability of the vehicle's body and the road-holding performance of the wheels; and when the vehicle runs on the smooth road, the control cylinder 10 contributes to improving the driving comfort felt by the driver. In addition, the above-described different control characteristics of the control cylinder 10 can be switched with each other owing to the simple construction thereof. Therefore, the suspension system can enjoy the above-described advantages without needing any complicated mechanisms or means.

### 6. Other Embodiments

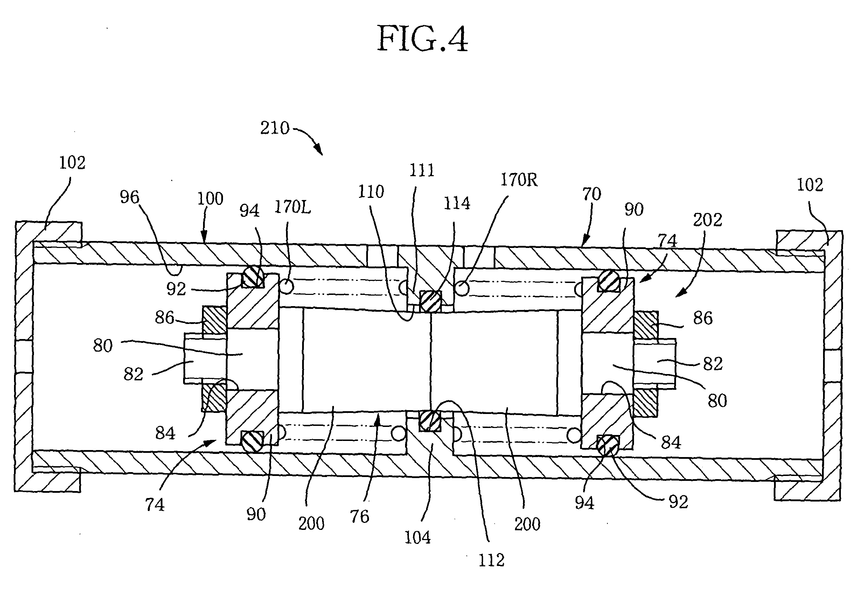

In the first embodiment shown in Figs. 1 through 3, the connection shaft 76 includes the large-diameter portion 140. However, in another hydraulic control cylinder 210 as a second embodiment of the present invention, shown in Fig. 4, a piston assembly 202 employs a connection shaft 76 that includes, in place of the large-diameter portion 140, two variable-diameter portions 200 a diameter of each of which continuously changes in the movement direction of the piston assembly 202. When the piston assembly 202 is moved from its neutral position (i.e., a central position, in the present embodiment) to one of opposite end portions of a permitted movement range in which the piston assembly 202 is permitted to move relative to the housing 70, a corresponding one of the two variable-diameter portions 200 liquid-tightly slides on an inner circumferential surface of an O-ring 114 held by a partition wall 104 of the housing 70. The diameter of each of the two variable-diameter portions 200 linearly increases in a direction away from the boundary of the two portions 200 toward a corresponding one of axially opposite ends of the connection shaft 76. In Fig. 4, however, a constant rate of increase of the diameter of each variable-diameter portion 200 is exaggerated. The two variable-diameter portions 200 are symmetric with each other with respect to a plane passing through the boundary of the two portions 200. The greatest diameter of each of the two variable-diameter portions 200 is smaller than a diameter of a through-hole 110 of the partition wall 104, and the smallest diameter of the each variable-diameter portion 200 is greater than an inner diameter of the O-ring 114.

Owing to the variable-diameter portions 200 of the connection shaft 76, the resistances to the movement of the piston assembly 202 increase as the position of the piston assembly 202 approaches each of the opposite end positions of the permitted movement range. Thus, the present control cylinder 210 employs the piston assembly 202 having the two variable-diameter portions 200. In the present control cylinder 210, a greater moving force is needed to move the piston assembly 202, as the position of the piston assembly 202 approaches each of the opposite end positions of the permitted movement range. Thus, it is more difficult for the piston assembly 202 to reach either one of the opposite end positions of the permitted movement range, as compared with the case where the connection shaft 76 does not include any variable-diameter portions 200. Therefore, the present control cylinder 210 more advantageously operates when the vehicle runs on rough road.

Since the resistances to the movement of the piston assembly 202 continuously increase as described above, a speed at which the piston assembly 202 moves from a position around each of the opposite end positions of the permitted movement range toward the neutral position can be effectively restrained. More specifically explained, respective biasing forces that are produced by two springs 170 to move the piston assembly 202 toward its neutral position increase as the position of the piston assembly 202 approaches each of the opposite end positions of the permitted movement range. Therefore, the speed at which the piston assembly 202 moves back from a position around the each end portion of the permitted movement range toward the neural position might be excessively high. However, since the connection shaft 76 includes the two variable-diameter portions 200, the resistances to the movement of the piston assembly 202 increase as the biasing forces of the springs 170 increase. Thus, when the piston assembly 202 moves toward its neutral position, the above-indicated biasing forces can be reduced and the speed of movement of the piston assembly 202 can be restrained.

In a modified embodiment in which the control cylinder 210 does not employ any springs 170, it is preferred to employ the connection shaft 76 including the variable-diameter portions 200. Owing to the variable-diameter portions 200 of the connection shaft 76, a speed at which the piston assembly 202 is moved by a certain moving force is reduced as the position of the piston assembly 220 approaches each end position of the permitted movement range. In another modified embodiment in which the piston assembly is adapted to be stopped, at each of the opposite end portions of the permitted movement range, by abutment thereof on a corresponding one of two cap members 102 of the housing 70, a speed at which the piston assembly 202 abuts on the one cap member 102 can be lowered. Thus, the modified control cylinder 210 can be advantageously prevented from being damaged.

In the control cylinder 210 shown in Fig. 4, the diameter of each of the two variable-diameter portions 200 continuously increases from the axially central portion of the connection shaft 76 toward a corresponding one of the axially opposite end portions of the same 76, according to a linear mathematical function. However, the control cylinder 210 may be modified to employ a connection shaft including variable-diameter portions a diameter of each of which continuously changes according to a quadratic function, an exponential function, or a non-linear function.

### 7. Advantages of Control Cylinder

As is apparent from the foregoing description, the hydraulic control cylinder 10, 210 can easily exhibit various control characteristics, since the resistances to the movement (i.e., sliding) of the piston assembly 72, 202 change as the position of the same 72, 202 relative to the housing 70 changes. The control cylinder 10 whose connection shaft 76 includes the large-diameter portion 140 improves not only the road-holding performance of the wheels when the vehicle runs on the rough road, but also the driving comfort felt by the driver when the vehicle runs on the smooth road. That is, the control cylinder 10 has the control characteristics suitable for the vehicle that runs on not only rough roads but also smooth roads. Meanwhile, the control cylinder 210 whose connection shaft 76 includes the two variable-diameter portions 200 not only controls the great moving forces that are produced to move the piston assembly 202, but also prevents the excessively great biasing forces of the springs 170 from acting on the piston assembly 202 in the state in which the assembly 202 is positioned at the position around either one of the opposite end portions of the permitted movement range. Thus, the control cylinder 210 is suitable for the vehicle that runs on rough roads frequently (for example, more frequently than it runs on smooth roads) and accordingly for the vehicle in which the piston assembly 202 frequently moves up to either one of the opposite end portions of the permitted movement range. That is, the control cylinder 210 has the control characteristics suitable for the vehicle that frequently runs on rough roads.

It is to be understood that the present invention may be embodied with other changes and improvements that may occur to a person skilled in the art, without departing from the spirit and scope of the invention defined in the appended claims.

## Claims

1. A hydraulic control apparatus (10; 210) for use in a suspension system of a vehicle having a plurality of wheels, the suspension system including, in addition to the hydraulic control apparatus, a plurality of hydraulic suspension devices (20) which are provided for the wheels, respectively, the hydraulic control apparatus being connected to each of the hydraulic suspension devices so as to control an operation of said each hydraulic suspension device, the hydraulic control apparatus comprising:
a housing (70) which has an inner space and includes a plurality of first sliding-related portions (100, 104);
a piston assembly (72; 202) which is provided in the inner space of the housing and includes at least one piston (74) and a plurality of second sliding-related portions (74, 140, 141; 200) which cooperate with the first sliding-related portions, respectively, to provide a plurality of pairs of first and second sliding-related portions (100, 104, 74, 140, 141; 200), respectively; and
a plurality of elastically deformable sealing members (114, 92) each of which is supported by one of the first and second sliding-related portions of a corresponding one of said pairs, such that said each elastically deformable sealing member is slideable on an other of the first and second sliding-related portions of said corresponding one pair,
wherein the pairs of first and second sliding-related portions and the elastically deformable sealing members cooperate with each other to separate the inner space of the housing into a plurality of hydraulic chambers (150) which are connected to the hydraulic suspension devices, respectively, and each of which is filled with a hydraulic liquid,
wherein when the piston assembly is moved in the housing in a movement direction, said each elastically deformable sealing member supported by said one of the first and second sliding-related portions of said corresponding one pair is slid on said other of the first and second sliding-related portions of said corresponding one pair, and a volume of said each hydraulic chamber is changed, and
wherein at least one pair of first and second sliding-related portions (104, 140, 141; 200) of the pairs of first and second sliding-related portions exhibits, when the piston assembly is positioned, in the movement direction, at different positions (140, 141; 200) relative to the housing, different resistances to the movement of the piston assembly relative to the housing.

2. The hydraulic control apparatus according to claim 1, wherein the housing (70) has a cylindrical shape and the piston assembly (72; 202) has a circular transverse cross section, wherein one (104) of the first and second sliding-related portions of said at least one pair (104, 140, 141; 200) supports a corresponding one (114) of the elastically deformable sealing members (114, 92) such that said corresponding one elastically deformable sealing member is slideable on a circumferential surface (116) of an other (140, 141; 200) of the first and second sliding-related portions of said at least one pair, and wherein a diameter of the circumferential surface of said other of the first and second sliding-related portions of said at least one pair changes in the movement direction so that the circumferential surface has said different resistances.

3. The hydraulic control apparatus according to claim 1 or claim 2, wherein said at least one pair of first and second sliding-related portions (104, 140, 141) includes a first resistant portion (140) and at least one second resistant portion (141) which are located adjacent to each other in the movement direction and have two said different resistances, respectively.

4. The hydraulic control apparatus according to claim 3, wherein the first sliding-related portion (104) of said at least one pair (104, 140, 141) supports a corresponding one (114) of the elastically deformable sealing members (114, 92) such that said corresponding one elastically deformable sealing member is slideable on the second sliding-related portion (140, 141) of said at least one pair, and wherein the second sliding-related portion of said at least one pair includes the first resistant portion (140) which has a first resistance and on which said corresponding one elastically deformable sealing member is positioned when the piston assembly (72) takes a reference position thereof relative to the housing (100), and two said second resistant portions (141) which have a second resistance smaller than the first resistance and are located on either side of, and adjacent to, the first resistant portion in the movement direction.

5. The hydraulic control apparatus according to claim 1 or claim 2, wherein said at least one pair of first and second sliding-related portions (104, 200) includes at least one resistant portion (200) having said different resistances which continuously change in the movement direction.

6. The hydraulic control apparatus according to claim 5, wherein said at least one pair of first and second sliding-related portions (104, 200) includes two said resistant portions (200) which are located adjacent to each other in the movement direction and each of which has said different resistances which continuously change in the movement direction, and wherein the two resistant portions have a same resistance at a boundary thereof where the two resistant portions are connected to each other, and said different resistances of each of the two resistant portions continuously increases or decreases in a direction away from the boundary.

7. The hydraulic control apparatus according to claim 6, wherein the first sliding-related portion (104) of said at least one pair (104, 200) supports a corresponding one (114) of the elastically deformable sealing members (114, 92) such that said corresponding one elastically deformable sealing member is slideable on the second sliding-related portion (200) of said at least one pair, wherein the second sliding-related portion of said at least one pair includes the two resistant portions (200), and wherein said corresponding one elastically deformable sealing member is positioned at the boundary of the two resistant portions when the piston assembly (202) takes a reference position thereof relative to the housing (70).

8. The hydraulic control apparatus according to any of claims 1 through 7, wherein the housing (70) has a cylindrical shape and the piston assembly (72; 202) has a circular transverse cross section, wherein the housing includes a partition wall (104) having a through-hole (112), and the piston assembly includes two pistons (74) and a connecting member (76) which extends through the through-hole of the partition wall and supports, at two opposite end portions thereof, the two pistons, respectively, so as to connect the two pistons, wherein the partition wall supports one (114) of the elastically deformable sealing members (114, 92) such that said one elastically deformable sealing member is slideable on an outer circumferential surface (140, 141) of the connecting member, and the two pistons support two elastically deformable sealing members (92) of the elastically deformable sealing members, respectively, such that each of the two elastically deformable sealing members is slideable on an inner circumferential surface (96) of the housing, wherein the first sliding-related portions comprise the partition wall and the inner circumferential surface of the housing, and the second sliding-related portions comprise the two pistons and the outer circumferential surface of the connecting member, and wherein the partition wall, the inner circumferential surface of the housing, the two pistons, the outer circumferential surface of the connecting member, and the three elastically deformable sealing members cooperate with each other to separate the inner space of the housing into four hydraulic chambers (150) as the hydraulic chambers.

9. The hydraulic control apparatus according to claim 8, wherein said at least one pair of first and second sliding-related portions (104, 140, 141; 200) comprises the partition wall (104) of the housing (100) and the outer circumferential surface (140, 141) of the connecting member (76).

10. The hydraulic control apparatus according to claim 8 or claim 9, further comprising two biasing members (170) one of which is provided in a first hydraulic chamber of the four hydraulic chambers (150) that is defined by the partition wall (104) and one of the two pistons (74) and an other of which is provided in a second hydraulic chamber of the four hydraulic chambers that is defined by the partition wall and an other of the two pistons (74), wherein the two biasing members cooperate with each other to bias the piston assembly (72; 202) toward a reference position thereof relative to the housing (70).

11. A suspension system for use in a vehicle having a body and a plurality of wheels, the suspension system comprising:
a hydraulic control apparatus (10; 210) according to any of claims 1 through 8 and 10; and
a plurality of hydraulic suspension devices (20) which are provided for the wheels, respectively,
wherein the hydraulic control apparatus is connected to each of the hydraulic suspension devices so as to control an operation of said each hydraulic suspension device.

12. The suspension system according to claim 11, wherein the housing (70) of the hydraulic control apparatus (10; 210) has a cylindrical shape, and the piston assembly (72; 202) provided in the housing has a circular transverse cross section, wherein the housing includes a partition wall (104) having a through-hole (112), and the piston assembly includes two pistons (74) and a connecting member (76) which extends through the through-hole of the partition wall and supports, at two opposite end portions thereof, the two pistons, respectively, so as to connect the two pistons, wherein the partition wall supports one (114) of the elastically deformable sealing members (114, 92) such that said one elastically deformable sealing member is slideable on an outer circumferential surface (140, 141) of the connecting member, and the two pistons support two elastically deformable sealing members (92) of the elastically deformable sealing members, respectively, such that each of the two elastically deformable sealing members is slideable on an inner circumferential surface (96) of the housing, wherein the first sliding-related portions comprise the partition wall and the inner circumferential surface of the housing, and the second sliding-related portions comprise the two pistons and the outer circumferential surface of the connecting member, wherein the partition wall, the inner circumferential surface of the housing, the two pistons, the outer circumferential surface of the connecting member, and the three elastically deformable sealing members cooperate with each other to separate the inner space of the housing into four hydraulic chambers (150) as the hydraulic chambers, and wherein said at least one pair of first and second sliding-related portions (104, 140, 141; 200) comprises the partition wall (104) and the outer circumferential surface (140, 141) of the connecting member (76).

13. The suspension system according to claim 12, wherein the wheels comprise four wheels including a front left wheel, a front right wheel, a rear left wheel, and a rear right wheel, and the hydraulic suspension devices (20) comprise four hydraulic suspension devices including a front left hydraulic suspension device, a front right hydraulic suspension device, a rear left hydraulic suspension device, and a rear right hydraulic suspension device which are provided for the front left wheel, the front right wheel, the rear left wheel, and the rear right wheel, respectively, and wherein the four hydraulic chambers (150) of the hydraulic control apparatus (10; 210) are connected to the front left hydraulic suspension device, the front right hydraulic suspension device, the rear left hydraulic suspension device, and the rear right hydraulic suspension device, respectively.

14. The suspension system according to claim 13, wherein the four hydraulic chambers (150) comprise a first inner hydraulic chamber (150IL) and a first outer hydraulic chamber (150OL) which are located on one of opposite sides of the partition wall (104), and a second inner hydraulic chamber (150IR) and a second outer hydraulic chamber (150OR) which are located on an other of the opposite sides of the partition wall, and wherein the first inner hydraulic chamber, the first outer hydraulic chamber, the second inner hydraulic chamber, and the second outer hydraulic chamber are connected to the front left hydraulic suspension device, the rear left hydraulic suspension device, the front right hydraulic suspension device, and the rear right hydraulic suspension device, respectively.

15. The suspension system according to any of claims 11 through 14, wherein each of the hydraulic suspension devices (20) comprises a cylindrical housing (30) which is connected to one of the body and a corresponding one of the wheels; a piston (32) which cooperates with the cylindrical housing to define, on either side of the piston, two chambers (40, 42) one (40) of which is filled with the hydraulic liquid and communicates with a corresponding one of the hydraulic chambers (150) of the hydraulic control apparatus (10; 210); and a piston rod (34) which is connected, at one of opposite ends thereof, to the piston, and is connected, at an other of the opposite ends thereof, to an other of the body and said corresponding one wheel.

16. The suspension system according to claim 15, further comprising a plurality of hydraulic-liquid accumulators (52) each of which is connected to said one chamber (40) of a corresponding one of the hydraulic suspension devices (20) and a corresponding one of the hydraulic chambers (150) of the hydraulic control apparatus (10; 210), and accumulates the hydraulic liquid.

17. The suspension system according to claim 15 or claim 16, further comprising a plurality of variable throttle valves (50) each of which is provided between said one chamber (40) of a corresponding one of the hydraulic suspension devices (20) and a corresponding one of the hydraulic chambers (150) of the hydraulic control apparatus (10; 210), wherein an amount of opening of said each variable throttle valve is variable.
